# EUROPEAN PATENT APPLICATION

(11) **EP 3 156 687 A2**
(43) Date of publication of application: **19.04.2017**
(21) Application number: 16193900.4
(22) Date of filing: 14.10.2016
(51) Int. Cl.: F16F 15/00, F16F 15/06, F16F 1/32

(54) **CONTROLLABLE CLUTCH AND USE THEREOF**

(30) Priority: 14.10.2015 PL 41437415
(71) Applicant: Instytut Podstawowych Problemów Techniki Polskiej Akademii Nauk, 02-106 Warszawa (PL); Adaptronica Sp. z.o.o., 05-092 Lomianki (PL)
(72) Inventor: Mróz, Arkadiusz, 32-600 O wi cim (PL); Biczyk, Jan Tomasz, 00-714 Warsaw (PL); Holnicki-Szulc, Jan, 02-502 Warsaw (PL)
(74) Representative: Kondrat, Mariusz

(57) **Abstract**

The object of the invention is a controllable clutch comprising an outer housing (6), an inner part (7) and an outer housing lid (5), wherein the inner part (7) has the shape of a truncated cone, thereby forming conical friction surfaces with the inner surface of the outer housing (6), and in the inner part (7) there is an active element (1) below which a pressure element (4) is located in one axis, wherein the active element (1) contacts the outer part (6) by means of a bearing (2), and the pressure element (4) contacts the inner part (7) by means of a bearing (3), and furthermore the active element (1) is connected to a controller.

The object of the invention is also the use of the controllable clutch in a structural node having a variable rigidity.

## Description

The object of the invention is a controllable clutch and use thereof as a lattice-frame node for vibration damping.

Techniques for damping excited vibrations can be divided into passive, active and semi-active ones. Passive damping of vibrations mainly comes down to the use of materials having strong damping characteristics. More effective active damping requires the use of activators inducing, according to the strategy adopted, forces opposing the movement of the object. This involves energy consumption and threat of unwanted excitation of unstable vibrations. Semi-active techniques for vibration damping become more and more attractive option allowing for effective and inexpensive (from the point of view of energy consumption) solution to the problem.

From patent specification DE19702518, a method and a device for bidirectional active influencing the connections in mechanical structures, through the use of the phenomenon of energy dissipation, as a result of change in the force influencing the connector or several connectors, caused by physical factors, for example, by piezoelectric activators or through the use of magnetostrictive effect, are known. The solution is characterised in that the transition from a neutral state to an active state of the structural connection (powering piezoelectric activators or alternatively inducing magnetostrictive effect) corresponds to the transition from a more susceptible connection to a less susceptible connection.

Also, from patent specification CN1542306, a friction damper having a friction disc with arched cut-outs, the disc being provided between two frames composed of four arms connected in their corners by hinges, is known. Screw mandrels are placed in arched openings of the disc, the screws being mounted in the arms of the frame and tightened with a nut. Between the nuts and the arms, on the screw mandrels, there are piezoelectric elements which increase the pressing force of the arms against the friction disc.

The solution is characterised in that the transition from the natural state to the active state of the friction damper (powering the piezoelectric activators) increases the pressing force of the arms against the friction disc.

From patent specification P.407763, a semi-active node comprising two support layers of a structural element, serving to damp vibrations of this structural element, is known. According to the invention, a clutch provided with an activator and pressing elements which provide pressing force against layers in the passive state is installed on a beam consisting of adjoining layers.

In the active state, the pressing force against the layers is completely or partially carried by the activator, which allows for the effect of damping the vibrations of the layered construction. From specification US8397883, a magnetorheological clutch from Lord Corporation is known, which comprises a rotor having first and second rotor surfaces, an outer periphery and at least one working portion proximate to or at the outer periphery. A shaft has the rotor connected at one end of the shaft in a manner to restrain relative rotation therebetween. A housing includes a first chamber housing the rotor therein in a manner to allow rotation thereof, and including a magnetic field generator spaced from the rotor, and configured and positioned for conveying a magnetic flux extending through controllable material between the field generator and working portion, in a direction toward the at least one working portion of the rotor. The controllable material is contained within the first chamber in contact with the at least one working portion of the rotor. Electronics are provided for controlling and/or monitoring operation of the brake.

The object of the invention was to create such a controllable clutch which, without power supply, will be maintained in the state of complete rigidity, whereas, after providing a control signal, it becomes supple. External control gives the possibility of making the clutch supple.

The essence of the invention is a controllable clutch comprising an outer housing, an inner part and an outer housing lid, characterised in that the inner part has the shape of a truncated cone, thereby forming conical friction surfaces with the inner surface of the outer housing, and in the inner part there is an active element below which a pressure element is located in one axis, wherein the active element contacts the outer part via a bearing, and the pressure element contacts the inner part via a bearing, and furthermore the active element is connected to a controller.

Preferably, the active element is a piezoelectric activator or a magnetostrictive rod.

Preferably, the pressure element is a Belleville spring or a spiral spring, or an elastomer insert.

Preferably, the bearings 2 and/or 3 are needle roller bearings.

Another object of the invention is the use of at least one controllable clutch in at least one structural node having a variable rigidity, wherein at least one structural outer element is attached to the outer housing, whereas at least one structural inner element is attached to the inner part.

According to the invention, inside the outer housing of the clutch, there are friction surfaces through which contact forces transfer interactions between elements connected through the clutch. Pressing force of the friction surfaces is controlled by mutual relations between the force generated by the pressure element which preferably is a pre-compressed Belleville spring, a spiral spring, or an elastomer insert, and the force generated by the active element which preferably is a piezoelectric activator or a magnetostrictive rod. The pressure element serves to maximise the pressing force against these friction surfaces so that the transferred torque is maximal at zero power voltage of the activator.

The active element serves to partially or completely eliminate the pressure force between the friction surfaces. Between the outer housing and the active element, and also between the inner part of the housing and the pressure element, there are bearings which are preferably needle roller bearings. The purpose of the bearings is to delete torsional stresses transferred to the active element. The controllable clutch which is the object of the invention allows, depending on the value of the control signal applied to the active element which is preferably a piezoelectric activator, adjustment of torque transferred by the clutch. In the passive state, i.e. with a zero control signal or absence thereof, the clutch transfers the maximum torque, and with a maximum control signal, the clutch transfers only residual moment.

The above feature allows the use of the controllable clutch as a structural node which - in certain situations - may be made supple. For example, the controllable clutches may be used as active nodes in selected nodes of the frame structure. As demonstrated by numerical simulations and experimental studies, such use of clutches, in combination with a suitable control algorithm, allows very active damping of free vibrations of the frame structure.

The invention is further presented in embodiments and in the drawing, in which Fig. 1 shows a cross-section through the controllable clutch, Fig. 2 shows the controllable clutch used as a structural node having a variable rigidity, Fig. 3 shows characteristics of two exemplary controllable clutches in the form of dependence of the torque as a function of voltage, Fig. 4 shows characteristics of the magnetorheological clutch from Lord Corporation having similar dimensions and weight, Fig. 5 shows a measured amplitude course of vibration displacement of a tested end of an exemplary damped structure.

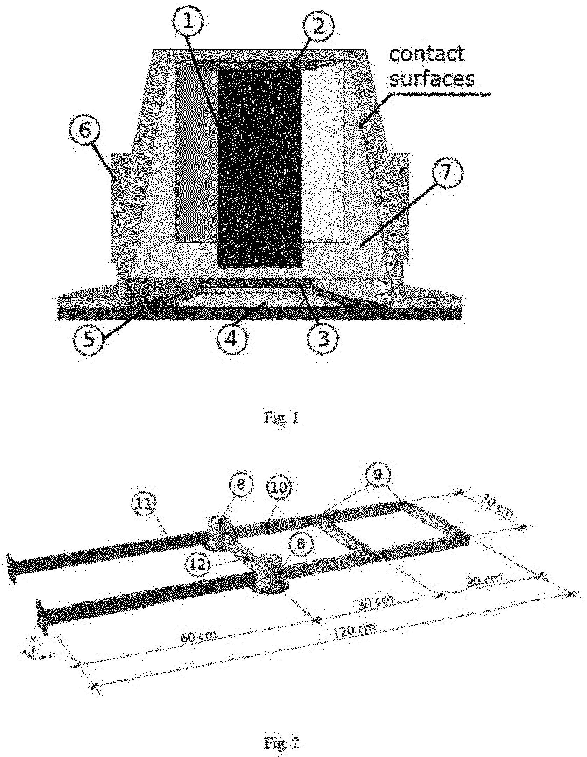

According to the invention shown in Fig. 1, the controllable clutch comprises an outer housing 6, an inner part 7 and an outer housing lid 5. Inside the inner part 7, there is an active element 1 below which a pressure element 4 is located in one axis in the space between the inner part 7 and the outer part 6. The inner part 7 has the shape of a truncated cone, thereby forming conical friction (contact) surfaces with the matched inner surface of the outer housing 6. The conical friction surfaces are pressed by the pressure element 4 located between the outer housing 6 of the clutch and the inner part 7 thereof, wherein one end thereof is directly adjacent to the outer housing lid 5, and the other end thereof is adjacent to the inner part 7 of the clutch via a needle roller bearing 3. Preferably, the pressure element 4 is a pre-compressed Belleville spring or a spiral spring, or an elastomer insert. The inner part 7 is provided with a socket for the active element. Preferably, the active element 1 is a piezoelectric activator or a magnetostrictive rod. One end of the active element 1 is adjacent to the outer housing 6 via a needle roller bearing 2, and the other end is directly adjacent to the socket of the active element. The active element is, on the inner side, fixed by means of a screw connection, and on the outer side, it is adjacent to the needle roller bearing 2. All connections are fitted, providing possibly the lowest clearances at both ends of the active element.

The active element 1 allows very rapid, complete or partial counterbalancing of the pressing force of the pressure element 4, thereby causing a change in the frictional force in the frictional connection and a change in the maximum torque transferred by the clutch. The controllable clutch is connected to a controller which allows control of the active element 1. The control may be carried out by means of an electrical system consisting of (a) a sensor monitoring the current deflection of the structure, (b) a control and measurement system which generates a control signal based on the implemented algorithm, based on the volume measured by the sensor and (c) an apparatus controlling the activator/activators.

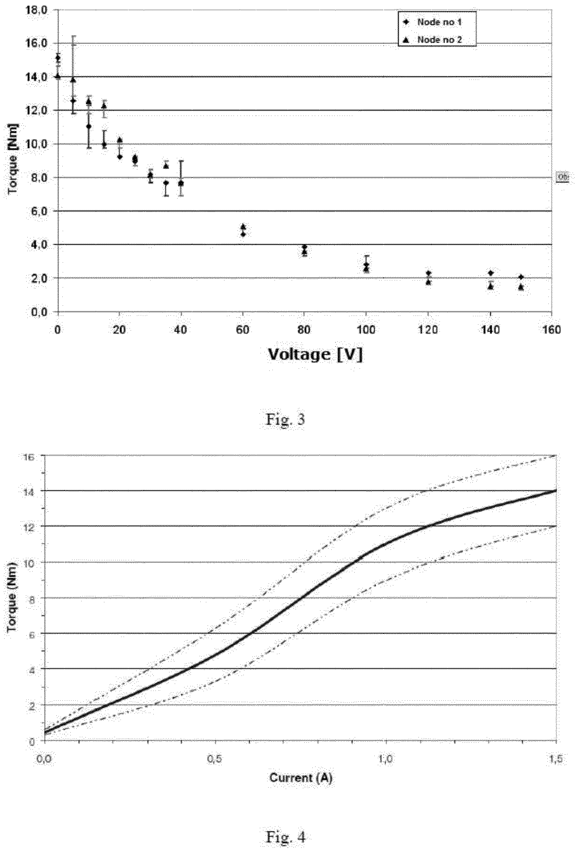

Characteristics of two units unit of the controllable clutch according to the invention obtained on a static experimental stand are shown in Fig. 3.

Fig. 4 shows characteristics of the magnetorheological brake from Lord Corporation having similar dimensions and weight, Fig. in order to compare the parameters. The magnetorheological brake reaches maximum values of the transferred moments for the maximum control signal, whereas for the controllable clutch according to the invention - in the passive state (without power supply), wherein the term moment means a moment acting around the axis of the clutch (the said moment trying to turn the inner part relative to the outer part).

One of the possible applications of the controllable clutch according to the invention is to use it as a structural node having a varying rigidity, intended for active damping of vibrations of the structure. In the embodiment shown in Fig. 2, the controllable clutch 8 may be arranged in certain nodes of the damped structure, thereby forming lattice-frame connections between structural elements 10, 11 and 12. Preferably, the controllable clutches 8 are arranged in the nodes closest to the fastening of the cantilever beam.

The other structural nodes form a typical, passive connection of constant rigidity 9. The lattice-frame node is a connection of three structural elements, wherein two of these elements 10 and 11 are attached to the outer part of the housing 6 of the clutch, whereas the third structural element 12 is fixed to the inner part 7 of the controllable clutch 8. Alternatively, more than two structural elements can be attached to the outer part.

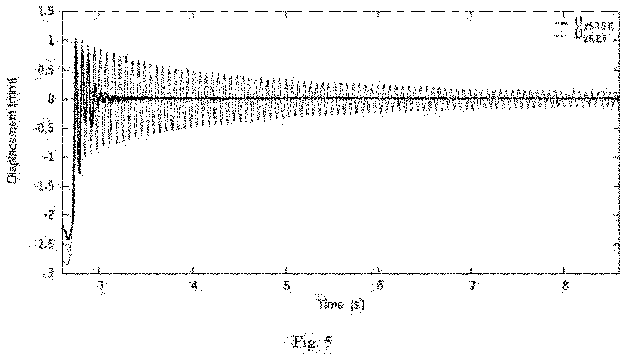

As demonstrated by experimental studies, the clutch which is the object of the invention installed in two units on the damped structure, in combination with a suitable algorithm controlling the operation of these clutches, showed very high effectiveness in damping free vibrations of the structure. An exemplary recorded course of amplitude of vibration displacement at an end of tested structure, shown in Fig. 2, is shown in Fig. 5. The structure, as shown in Fig. 2, was attached to the wall, then excited to produce vibrations by means of initial movement of the structure end. Thereby, the amplitude course was recorded as a reference course. Then, having excited the structure for vibration, the algorithm controlling the clutches was activated - which corresponds to the amplitude of damped vibrations.

In Fig. 5, the course indicated with a thin line corresponds to reference vibrations, at lattice-frame nodes working in the rigid (frame) state, whereas the course indicated with a thick line corresponds to vibrations damped by means of the controllable clutches. The value of the displacement amplitude was reduced by 92.5% after 6 cycles of oscillation and by 98.0% after 10 cycles of oscillation.

An advantage of the invention in the context of its use as a structural node - compared to the controllable brake - is the feature consisting in full rigidity in the passive state. This actually means that when having a power failure, problems with the apparatus or being in any other unusual situation, the invention will work in the state of full rigidity, i.e. will not weaken the structure. This is important from the point of view of structural reliability.

## Claims

1. A controllable clutch comprising an outer housing (6), an inner part (7) and an outer housing lid (5), **characterised in that** the inner part (7) has the shape of a truncated cone, thereby forming conical friction surfaces with the inner surface of the outer housing (6), and in the inner part (7) there is an active element (1) below which a pressure element (4) is located in one axis, wherein the active element (1) contacts the outer part (6) by means of a bearing (2), whereas the pressure element (4) contacts the inner part (7) by means of a bearing (3), and furthermore the active element (1) is connected to a controller.

2. The controllable clutch according to claim 1, **characterised in that** the active element (1) is a piezoelectric activator or a magnetostrictive rod.

3. The controllable clutch according to claim 1, **characterised in that** the pressure element (4) is a Belleville spring or a spiral spring, or an elastomer insert.

4. The controllable clutch according to claim 1, **characterised in that** the bearings 2 and/or 3 are needle roller bearings.

5. The use of at least one controllable clutch described in claims 1 - 4, in at least one structural node having a variable rigidity, wherein at least one structural outer element is attached to the outer housing (6), whereas at least one structural inner element is attached to the inner part (7).
